# EUROPÄISCHE PATENTSCHRIFT

(11) **EP 0 939 017 B1**
(45) Veröffentlichungstag und Bekanntmachung des Hinweises auf die Patenterteilung: **02.05.2003**
(21) Anmeldenummer: 99103524.7
(22) Anmeldetag: 22.02.1999
(51) Int. Cl.: B61D 17/22, B60D 5/00

(54) **Übergangseinrichtung zwischen zwei gelenkig miteinander verbundenen Eisenbahnfahrzeugen**
Communication passage between two articulated railway vehicles
Dispositif d'intercirculation entre deux véhicules ferroviaires articulés

(30) Priorität: 24.02.1998 AT 32498
(43) Veröffentlichungstag der Anmeldung: 01.09.1999
(73) Patentinhaber: Connex Verkehr GmbH, 60389 Frankfurt (DE)
(72) Erfinder: Thönig, Hannes Ing., 6212 Eben Eben (AT); Sommerer, Rudolf Dr., 6200 Jenbach (AT)
(74) Vertreter: Torggler, Paul Norbert, Dr.

(56) Entgegenhaltungen:
- EP-A- 0 297 936
- DD-A- 14 975
- US-A- 5 690 033

## Beschreibung

Die Erfindung betrifft eine Übergangseinrichtung zwischen zwei gelenkig miteinander verbundenen Eisenbahnfahrzeugen, insbesondere Fahrzeuggliedem, mit an den Fahrzeugen gehaltenen Tragelementen für eine beide Fahrzeuge bzw. Fahrzeugglieder verbindende Brücke aus gummielastischem Material, in die Querträger eingegossen sind.

Derartige Übergangseinrichtungen, die aufgrund der ständigen Relativbewegung zwischen den Fahrzeugen oder Fahrzeuggliedern nicht starr sein können, sind beispielsweise aus der EP-A 297 936 bekannt. Die aus dem gummielastischen Material an beiden Seiten vorstehenden Querträger sind an ihrem Ende mit Ösen versehen und auf Tragstäben aufgefädelt, die an den zu verbindenden Fahrzeugrahmen festgelegt und in ihrer Länge bzw. ihrem Befestigungsabstand veränderbar sind, um den Abstandsänderungen zwischen den Fahrzeugen oder Fahrzeugteilen gerecht werden zu können. Das Verschieben der Ösen auf den Tragstäben oder der Tragstäbe in Lagerstellen an den Fahrzeugrahmen erfordert Gleitlager, die auch eine bestimmte Verdrehung zulassen, woraus sich aus den schwierigen Verhältnissen, denen fahrende Züge ausgesetzt sind, Probleme ergeben können.

Aus der DD-A 14 975 ist eine Übergangseinrichtung bekannt, die aus einer an einem Fahrzeugrahmen starr angebrachten Stützplatte mit breite Nuten definierenden Stegen und aus einzeln beweglichen mit großen zwischen die Stege eingreifenden und auf der Stützplatte lose aufliegenden Stegen aufgebaut ist, die am zweiten Fahrzeugrahmen gelagert sind. Die Brücke ist mit einem Belag versehen, der nur an einem Rahmen befestigt ist.

Aus der WO-A 97/02168 ist eine Übergangseinrichtung bekannt, bei der mehrere Trittund Gleitglieder Bohrungen aufweisen, und auf zwei Tragelementen relativ zueinander beweglich und verschieblich aufgefädelt sind. Die Tragelemente sind jeweils an beiden Fahrzeugen bzw. Fahrzeugteilen verschiebbar gehalten sind. Zwischen den Tritt- und Gleitgliedern, deren letztes jeweils an einem der beiden Fahrzeuge fixiert ist, sind Federn und Abstandbegrenzungsmittel vorgesehen, sodaß die Bewegung der Trittund Gleitglieder vergleichmäßigt wird.

Ziel der Erfindung ist eine durchgehend geschlossene Übergangseinrichtung ohne längenveränderliche oder verschiebbar angeordnete Tragelemente. Dies wird dadurch erreicht, daß die Brücke auf zwei unverbundenen Tragelementen gleitend aufliegt, von denen jedes von einem der beiden Fahrzeugrahmen absteht. Dank der Einteiligkeit des aufliegenden Brückenstückes ist es nicht erforderlich, die Tragelemente miteinander zu verbinden bzw. durchgehend auszubilden, sondern es genügt eine im wesentlichen gleichmäßige Unterstützung des gesamten Brückenbereiches.

In einer bevorzugten Ausführung ist vorgesehen, daß die Unterseiten der Querträger freiliegen und mit einem Gleitbelag versehen sind, sodaß die Reibung zu den unterstützenden Tragelementen gering ist. Im Längsschnitt kann die Dicke des Brückenelementes variieren, und zwischen den Querträgern weist das Brückenelement vorzugsweise Dehnbereiche mit geringerer Dicke auf. In den Dehnbereichen kann die minimale Dicke des Brückenelementes etwa 40% der maximalen Dicke im Bereich der Querträger und der Randbereiche betragen, wobei an der Oberseite, also im Gehbereich, bevorzugt nur geringe Mulden ausgebildet sind.

Für die Befestigung des Brückenelementes an den beiden Fahrzeugen bzw. Gliedern sind an den Querrandbereichen bevorzugt Verbindungselemente vorgesehen, die einen freiliegenden Wulst aufweisen. Der Wulst ist insbesondere von einem hinterschnittenen C-Profil umgriffen, das am Fahrzeugrahmen fixierbar ist. In einer bevorzugten Ausführung ist das C-Profil aus zwei Teilprofilen zusammengesetzt, die miteinander verbunden sind.

In einer weiteren bevorzugten Ausführung ist jedes Tragelement rechen- oder kammartig ausgebildet und weist Auflagestege auf, die sich in Längsrichtung senkrecht zu einer Tragleiste erstrecken, die am Fahrzeugrahmen stimseitig befestigt ist. Die Auflagestege sind bevorzugt zueinander in Querrichtung versetzt und greifen lose ineinander, sodaß auch bei einer maximalen Kurvenfahrt alle Querträger auf den Auflagestegen aufliegen.

Nachstehend wird nun die Erfindung an Hand der Figuren der beiliegenden Zeichnung näher beschrieben, ohne darauf beschränkt zu sein. Es zeigen:
Fig. 1 eine Draufsicht auf ein Brückenelement der Übergangseinrichtung,
Fig. 2 eine Draufsicht auf ein Tragelement der Übergangseinrichtung,
Fig. 3 eine Stirnansicht des Tragelementes,
Fig. 4 einen Schnitt nach der Linie IV-IV der Fig. 1 durch die Übergangseinrichtung,
Fig. 5 und 6 schematische Draufsichten auf die Übergangseinrichtung während der Kurvenfahrt mit zwei verschiedenen Krümmungsradien und
Fig. 7 eine schematische Darstellung einer mehrteilig aufgebauten Übergangseinrichtung.

Eine Übergangseinrichtung zwischen zwei gelenkig verbundenen Eisenbahnfahrzeugen, insbesondere zwischen zwei Fahrzeuggliedern eines Gliederzuges, weist ein einstückiges Brückenelement 1 auf, das auf zwei, miteinander nicht verbundenen Tragelementen 10 gleitend gelagert ist. Das Brückenelement 1 besteht aus einem gummielastischen Material, dessen Dehnfähigkeit so groß ist, daß bei einem Kurvenradius von 80 Metern eine Verlängerung von etwa 25 % des Normalabstandes möglich ist.. Das Brückenelement umfaßt mehrere parallel zueinander angeordnete Querträger 3, die in das Material eingegossen sind, wobei deren Unterseiten freiliegen, die mit einem Gleitbelag 4 od.dgl. belegt sind.

In den beiden Querrandbereichen 9 des Brückenelementes 1 sind in das gummielastische Material Verbindungselemente 5 eingegossen, die einen vorstehenden, hintergreifbaren Wulst 6 tragen. Jeder Wulst 6 ist zwischen zwei Teilprofilen 11, 12 gehalten, die durch Verbindungsschrauben 14 zu einem den Wulst 6 umschließenden, hinterschnittenen C-Profil zusammengefügt sind.

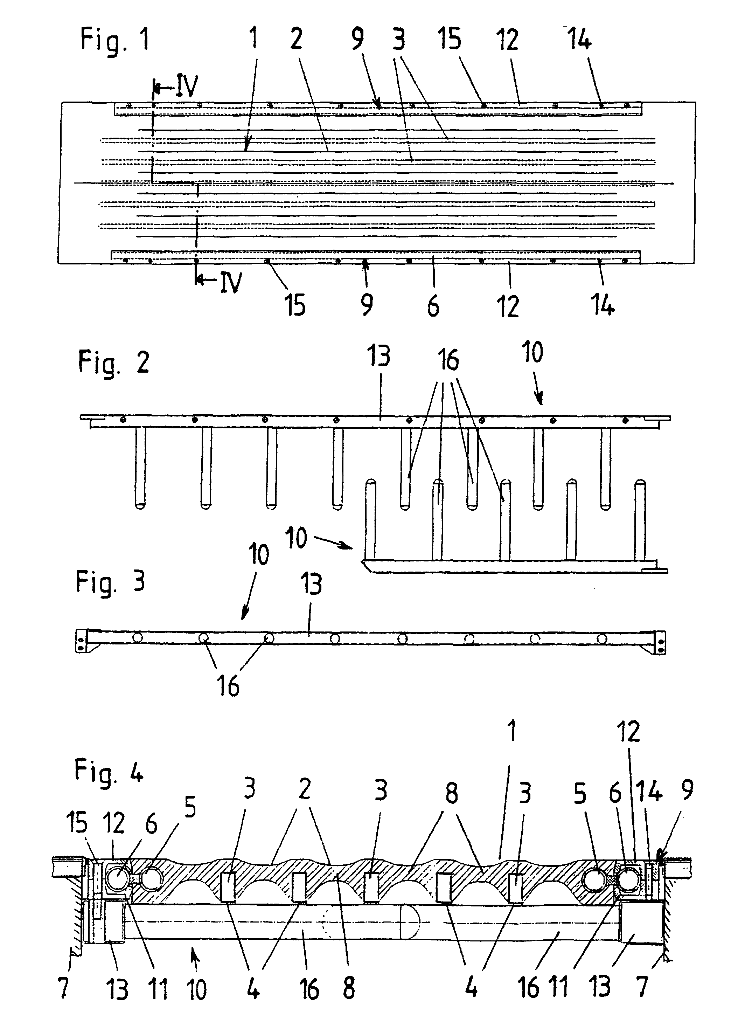

Jedes Tragelement 10 weist einen am Rahmen 7 des Fahrzeuges bzw. Fahrzeuggliedes befestigte Tragleiste 13 auf, an der das C-Profil des Brückenelementes 1 mittels Schrauben 15 fixiert ist. Von der Tragleiste 13 erstrecken sich in Längsrichtung des Fahrzeugs mehrere Auflagestege 16, deren Länge etwa zwei Drittel der Breite des Brückenelementes 1 beträgt. Jedes Tragelement 10 hat daher ein etwa rechen- oder kammartiges Aussehen, wie die Draufsicht in Fig. 2 zeigt.

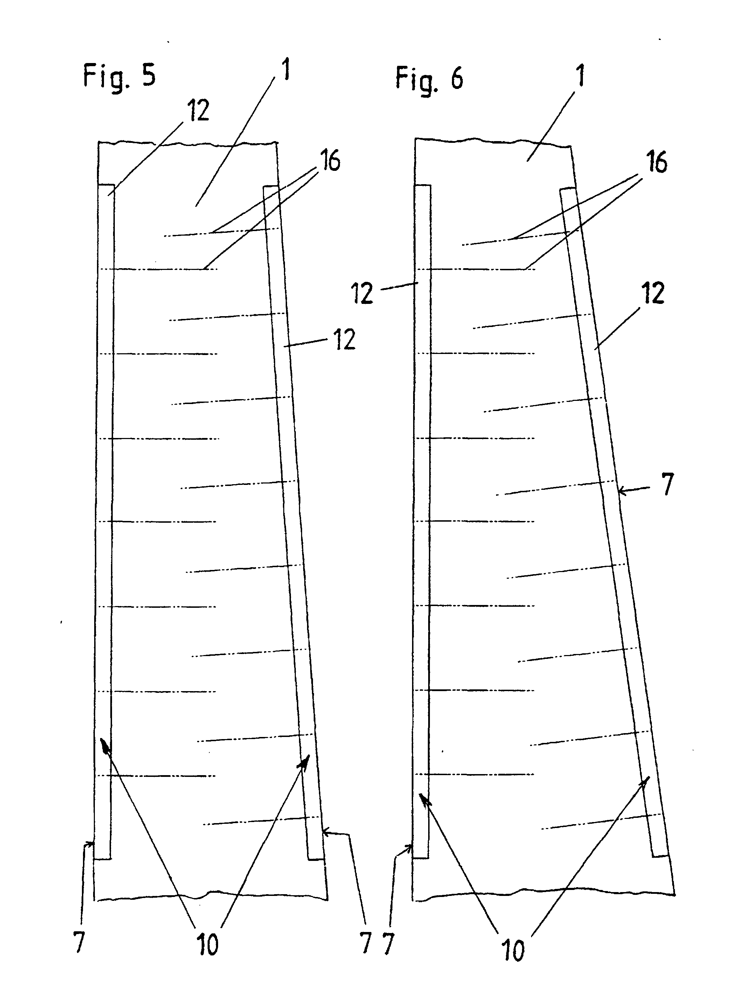

Die Auflagestege 16 sind an den beiden Tragelementen 10 versetzt angeordnet, sodaß jeder innere Auflagesteg 16 eines Tragelementes 10 zwischen zwei Auflagestege 16 des anderen Tragelementes 10 eingreift, wobei die Auflagestege 16 einander etwa zu einem Drittel in Längsrichtung überlappen. Dadurch bleibt in Kurvenfahrten mit einem Krümmungsradius von 150 m (Fig. 5) bzw. auch noch mit einem Krümmungsradius von 80 m (Fig. 6) eine durchgehende Auflage für alle Querträger 3 des Brückenelementes 1 erhalten, die mit ihren Gleitbelägen 4 auf den Auflagestegen 16 ruhen.

Anstelle von symmetrischen Tragelementen 10 mit einer um eins verschiedenen Anzahl von Auflagestegen 16 sind auch gleiche Tragelemente 10 mit einer asymmetrischen Anordnung der Auflagestege 16 verwendbar.

Das Brückenelement 1 weist zwischen den Querträgern 3 Dehnbereiche 8 auf, in denen die Dicke etwa auf die Hälfte reduziert ist, wobei an der Oberseite Mulden 2 mit geringer Tiefe und an der Unterseite Rillen mit großer Tiefe vorgesehen sind (Fig. 4). Das Brückenelement 1 ist daher sowohl ausreichend dehnfähig als auch ausreichend stauchfähig, um auch die in Fig. 6 gezeigte Extremstellung einzunehmen. Die Dehnbereiche 8 nehmen die Verlängerung bzw. Verkürzung des mit beiden Rahmen 7 fix verbundenen Brückenelementes 1 auf, und es ergibt sich auch in Kurvenfahrten eine geschlossene, im wesentlichen ebene begehbare Bodenfläche zwischen den Fahrzeugen bzw. Fahrzeuggliedern.

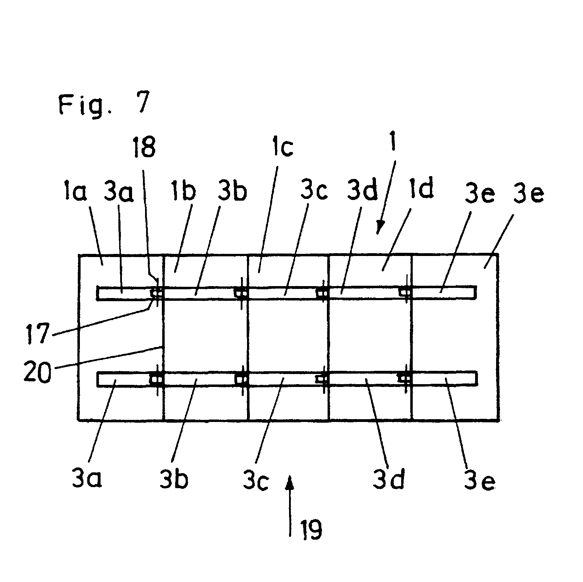

Bei dem in Fig. 7 dargestellten Ausführungsbeispiel besteht die Übergangsbrücke aus fünf quer zur Fahrtrichtung 19 nebeneinanderliegenden Teilen 1a bis 1e, die im Betrieb fest miteinander verbunden sind, sodaß die Trennlinie 20 stets geschlossen ist. In jedem Übergangsbrückenteil 1a bis 1e ist ein Querträgerteil 3a bis 3e eingeschlossen. Diese sind alle als Hohlprofile ausgebildet und weisen einen Fortsatz 17 auf, der jeweils in den anschließenden Teil paßt. Dann werden die Querträgerteile 3a bis 3e mittels Schrauben 18 zusammengeschraubt. Der mehrteilige Aufbau hat einige Vorteile: Die Teile können einzeln gestützt werden. Bei einem Einreißen findet der Riß jedenfalls an der Trennlinie 20 sein Ende. Außerdem können unterschiedliche Gummimischungen verwendet werden, beispielsweise weichelastische außen und stabilere innen.

## Patentansprüche

1. Übergangseinrichtung zwischen zwei gelenkig miteinander verbundenen Eisenbahnfahrzeugen, insbesondere Fahrzeuggliedern, mit an den Fahrzeugen gehaltenen Tragelementen (10) für eine beide Fahrzeuge bzw. Fahrzeugglieder verbindende Brücke (1) aus gummielastischem Material, in die Querträger (3) eingegossen sind, **dadurch gekennzeichnet, daß** die Brücke (1) auf zwei unverbundenen Tragelementen (10) gleitend aufliegt, von denen jedes von einem der beiden Fahrzeugrahmen (7) absteht.

2. Übergangseinrichtung nach Anspruch 1, **dadurch gekennzeichnet, daß** die Unterseiten der Querträger (3) freiliegen und mit einem Gleitbelag (4) versehen sind.

3. Übergangseinrichtung nach Anspruch 1 oder 2, **dadurch gekennzeichnet, daß** die Brücke (1) zwischen den Querträgern (3) Dehnbereiche (8) mit geringer Dicke aufweist.

4. Übergangseinrichtung nach einem der Ansprüche 1 bis 3, **dadurch gekennzeichnet, daß** die Brücke (1) in den beiden Querrandbereichen (9) parallel zu den Querträgern (3) sich erstreckende Verbindungselemente (5) aufweist.

5. Übergangseinrichtung nach Anspruch 4, **dadurch gekennzeichnet, daß** jedes Verbindungselement (5) mit einem freiliegenden Wulst (6) versehen ist, der von einem am Fahrzeugrahmen (7) fixierbaren C-Profil umgriffen ist.

6. Übergangseinrichtung nach Anspruch 5, **dadurch gekennzeichnet, daß** das C-Profil aus zwei miteinander verbundenen Teilprofilen (11, 12) zusammengesetzt ist.

7. Übergangseinrichtung nach einem der Ansprüche 1 bis 6, **dadurch gekennzeichnet, daß** die Tragelemente (10) einander in Längsrichtung überlappen

8. Übergangseinrichtung nach Anspruch 7, **dadurch gekennzeichnet, daß** jedes Tragelement (10) rechen- oder kammartig ausgebildet ist, und von einer stirnseitig am Fahrzeugrahmen (7) befestigten Tragleiste (13) senkrecht abstehende Auflagestege (16) aufweist.

9. Übergangseinrichtung nach Anspruch 8, **dadurch gekennzeichnet, daß** beide Tragelemente (10) zueinander versetzte Auflagestege (16) aufweisen, die lose ineinandergreifen.

10. Übergangseinrichtung nach einem der Ansprüche 1 bis 9, **dadurch gekennzeichnet, daß** die Brücke einstückig ausgebildet ist.

11. Übergangseinrichtung nach einem der Ansprüche 1 bis 9, **dadurch gekennzeichnet, daß** die Brücke zwei- oder mehrteilig ausgebildet ist, wobei die Brückenteile (1a, 1b, 1c, 1d, 1e) im Betrieb fest miteinander verbunden sind und die Trennlinie (20) zwischen den Brückenteilen vorzugsweise in Fahrzeuglängsrichtung (19) verläuft.

12. Übergangseinrichtung nach Anspruch 11, **dadurch gekennzeichnet, daß** die Querträger (3) unterteilt sind, wobei in jeden Brückenteil zumindest ein Querträgerteil eingegossen ist und wobei die Querträgerteile (3a, 3b, 3c, 3d, 3e) lösbar verbunden, vorzugsweise verschraubt, sind.

13. Übergangseinrichtung nach Anspruch 11 oder 12, **dadurch gekennzeichnet, daß** das gummielastische Material der Brückenteile verschiedene Elastizitätswerte aufweist.

## Claims

1. A transfer arrangement between two pivotably interconnected railway vehicles, in particular vehicle units, comprising carrier elements (10) which are held to the vehicles for a bridge (1) of rubber-elastic material which connects both vehicles or vehicle units and into which transverse bearers (3) are cast, **characterised in that** the bridge (1) rests slidably on two unconnected carrier elements (10), each of which projects from one of the two vehicle chassis (7).

2. A transfer arrangement according to claim 1 **characterised in that** the undersides of the transverse bearers (3) are exposed and are provided with a sliding layer (4).

3. A transfer arrangement according to claim 1 or claim 2 **characterised in that** the bridge (1) between the transverse bearers (3) has stretch regions (8) of small thickness.

4. A transfer arrangement according to one of claims 1 to 3 **characterised in that** the bridge (1) has connecting elements (5) extending parallel to the transverse bearers (3) in the two transverse edge regions (9).

5. A transfer arrangement according to claim 4 **characterised in that** each connecting element (5) is provided with an exposed bead (6) which is embraced by a C-shaped profile member which can be fixed to the vehicle chassis (7).

6. A transfer arrangement according to claim 5 **characterised in that** the C-shaped profile member is composed of two interconnected profile portions (11, 12).

7. A transfer arrangement according to one of claims 1 to 6 **characterised in that** the carrier elements (10) overlap each other in the longitudinal direction.

8. A transfer arrangement according to claim 7 **characterised in that** each carrier element (10) is of a rake-like or comb-like configuration and has support arms (16) projecting perpendicularly from a carrier bar (13) which is fixed at the end to the vehicle chassis (7).

9. A transfer arrangement according to claim 8 **characterised in that** both carrier elements (10) have mutually displaced support arms (16) which engage loosely one into the other.

10. A transfer arrangement according to one of claims 1 to 9 **characterised in that** the bridge is formed in one piece.

11. A transfer arrangement according to one of claims 1 to 9 **characterised in that** the bridge is formed in two or more parts, wherein the bridge parts (1a, 1b, 1c, 1d, 1e) are fixedly connected together in operation and the separating line (20) between the bridge parts preferably extends in the longitudinal direction (19) of the vehicle.

12. A transfer arrangement according to claim 11 **characterised in that** the transverse bearers (3) are subdivided, wherein at least one transverse bearer portion is cast into each bridge part and wherein the transverse bearer portions (3a, 3b, 3c, 3d, 3e) are releasably connected, preferably screwed.

13. A transfer arrangement according to claim 11 or claim 12 **characterised in that** the rubber-elastic material of the bridge parts has different elasticity values.

## Revendications

1. Dispositif de passage entre deux véhicules ferroviaires reliés ensemble de façon articulée, en particulier des sections de voiture, avec des éléments porteurs (10) fixés sur les véhicules, pour un pont (1) reliant les deux véhicules ou sections de voiture, pont réalisé en matériau ayant l'élasticité du caoutchouc, dans lequel sont noyées des traverses (3), **caractérisé en ce que** le pont (1) est posé de façon à pouvoir glisser sur deux éléments porteurs (10) non reliés dont chacun fait saillie de l'un des deux châssis de véhicule (7).

2. Dispositif de passage selon la revendication 1, **caractérisé en ce que** les faces inférieures des traverses (3) sont libres et munies d'un revêtement glissant (4).

3. Dispositif de passage selon la revendication 1 ou 2, **caractérisé en ce que** le pont (1) présente entre les traverses (3) des zones d'extension (8) à faible épaisseur.

4. Dispositif de passage selon l'une des revendications 1 ou 2, **caractérisé en ce que** le pont (1) présente, dans les deux zones de bordure transversales (9), des éléments de liaison (5) s'étendant parallèlement aux traverses (3).

5. Dispositif de passage selon la revendication 4, **caractérisé en ce que** chaque élément de liaison (5) est muni d'un bourrelet (6) dégagé, entouré par un profilé en C susceptible d'être fixé sur le châsis de véhicule (7).

6. Dispositif de passage selon la revendication 7, **caractérisé en ce que** le profilé en C est composé de deux profilés partiels (11, 12) reliés ensemble.

7. Dispositif de passage selon l'une des revendications 1 à 6, **caractérisé en ce que** les éléments porteurs (10) se chevauchent l'un l'autre en direction longitudinale.

8. Dispositif de passage selon la revendication 7, **caractérisé en ce que** chaque élément porteur (10) est réalisé du genre d'un râteau ou d'un peigne et présente des nervures de pose (16) faisant saillie perpendiculairement d'une bande de support (13) fixée frontalement sur le cadre de véhicule (7).

9. Dispositif de passage selon la revendication 8, **caractérisé en ce que** les deux éléments porteurs (10) présentent des nervures de pose (16) décalées les unes par rapport aux autres et s'engageant les unes dans les autres de façon lâche.

10. Dispositif de passage selon l'une des revendications 1 à 9, **caractérisé en ce que** le pont est réalisé d'une seule pièce.

11. Dispositif de passage selon l'une des revendications 1 à 9, **caractérisé en ce que** le pont est réalisé en deux ou plusieurs parties, les parties de pont (1a, 1b, 1c, 1d, 1e) étant reliées ensemble rigidement en fonctionnement et la ligne de séparation (20) entre les parties de pont s'étendant de préférence dans la direction longitudinale du véhicule (19).

12. Dispositif de passage selon la revendication 11, **caractérisé en ce que** les traverses (3) sont subdivisées, dans chaque partie de pont étant noyée au moins une partie de traverse et les parties de traverses (3a, 3b, 3c, 3d, 3e) étant reliées de façon désolidarisable, de préférence par vissage.

13. Dispositif de passage selon la revendication 11 ou 12, **caractérisé en ce que** le matériau, ayant l'élasticité du caoutchouc, des parties de pont présente des valeurs d'élasticité différentes.
